# EUROPEAN PATENT APPLICATION

(11) **EP 1 551 028 A1**
(43) Date of publication of application: **06.07.2005**
(21) Application number: 04031028.6
(22) Date of filing: 30.12.2004
(51) Int. Cl.: G11B 27/034, G11B 27/34, H04N 5/92

(54) **Television receiver and method of displaying and editing images in electronic photo album**

(30) Priority: 30.12.2003 KR 2003099775; 30.12.2003 KR 2003099510
(71) Applicant: LG ELECTRONICS INC., Seoul (KR)
(72) Inventor: Kim, Ick Hwan, Gumi-si Gyeongsangbuk-do (KR); Lim, Jin Kyu, Buk-gu Daegu (KR)
(74) Representative: Kruspig, Volkmar, Dipl.-Ing.

(57) **Abstract**

A television receiver and method of displaying and editing images in an electronic photo album are disclosed. The television receiver includes an interface means reading a plurality of still images and additional information corresponding to the still images, wherein the still images are stored in an external device, a central processing unit displaying a window including a sub-picture for searching the still images, and a main picture for displaying a still image selected from the sub-picture, and a memory for storing the read additional information.

## Description

This application claims the benefit of the Korean Patent Application No. 10-2003-0099775 and No. 10-2003-0099510, both filed on December 30, 2003, which are hereby incorporated by reference as if fully set forth herein.

### BACKGROUND OF THE INVENTION

### Field of the Invention

The present invention relates to a television receiver, and more particularly, to a television receiver and method of displaying and editing images in an electronic photo album.

### Discussion of the Related Art

In recent technology, a wide range of devices for representing electronic photo albums, which include a plurality of digital images (or digital photos). For example, a personal computer may receive digital images, which are taken or filmed by digital cameras or digital camera recorders, through an interface and may store the received digital images to a memory. Then, the stored digital images are displayed when a user desires to view the digital images.

Digital television receivers of the recent technology also provide electronic photo album functions. However, in the related art digital television receivers, the digital images must be decoded each time the stored digital image is displayed onto the television screen, which eventually leads to a disadvantage in that the user should search for each of the stored images he or she wishes to view and that a long waiting time is required to view a stored digital image. Moreover, the related art digital television receiver is not provided with an editing function for editing or modifying the stored digital image.

### SUMMARY OF THE INVENTION

Accordingly, the present invention is directed to a television receiver and method of displaying and editing images in an electronic photo album that substantially obviate one or more problems due to limitations and disadvantages of the related art.

An object of the present invention is to provide a television receiver and method of displaying and editing images in an electronic photo album that can easily select and display desired digital images among a plurality of digital images stored in the electronic photo album.

Another object of the present invention is to provide a television receiver that can edit images of an electronic photo album and a method of editing the images.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a television receiver includes an interface means reading a plurality of still images and additional information corresponding to the still images, wherein the still images are stored in an external device, a central processing unit displaying a window including a sub-picture for searching the still images, and a main picture for displaying a still image selected from the sub-picture, and a memory for storing the read additional information.

Herein, the additional information may include at least one of a file name, a file size, and a file creation date of each of the still images. And, the window further may include at least one selectable option for searching the still images from the sub-picture.

The central processing unit may display the still image selected from the sub-picture onto the main picture in full size. And, the central processing unit may also display the still images onto the sub-picture in a thumbnail size.

Furthermore, the central processing unit may change color information corresponding to pixels of the selected still image. The central processing unit may also change a value of the color information to 0, so as to change the still image into a black-and-white image. And, the central processing unit may store color information for pixels of the selected still image into a frame memory.

In another aspect of the present invention, a method of displaying an image of a television receiver includes reading a plurality of still images stored in an external device, displaying the still images onto a sub-picture, selecting any one of the still images displayed onto the sub-picture, and displaying the selected still image onto a main picture.

The step of displaying the still images onto a sub-picture may include displaying the still images onto the sub-picture one by one, or displaying the still images onto the sub-picture in a thumbnail size. The method of displaying an image of a television receiver may also include reading additional information corresponding to the still images from the external device, and may also include storing the additional information in a memory, and displaying the stored additional information. The method of displaying an image of a television receiver may further include changing the color information for pixels of the selected still image in accordance with a user command.

In a further aspect of the present invention, a method of displaying an image of a television receiver includes displaying still images onto a sub-picture, selecting any one of the still images being displayed onto the sub-picture, displaying the selected still image onto a main picture, selecting a portion of the still image, and changing color information for pixels corresponding to the selected portion. Herein, the step of changing color information for pixels corresponding to the selected portion may include changing a value of the color information to 0, so as to change the selected portion into a black-and-white image portion.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 illustrates a structure of a digital television receiver according to the present invention;
FIG. 2 illustrates a flow chart showing the process steps of a method searching and displaying images of an electronic photo album according to the present invention;
FIG. 3 illustrates a thumbnail window according to the present invention;
FIG. 4 illustrates an example of a slide-window according to the present invention;
FIG. 5 illustrates another example of a slide-window according to the present invention;
FIG. 6 illustrates a flow chart showing the process steps of editing an image of the electronic photo album according to the present invention;
FIG. 7 illustrates pixels of a color image;
FIG. 8 illustrates pixels of a black-and-white image; and
FIG. 9 illustrates an editing window according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

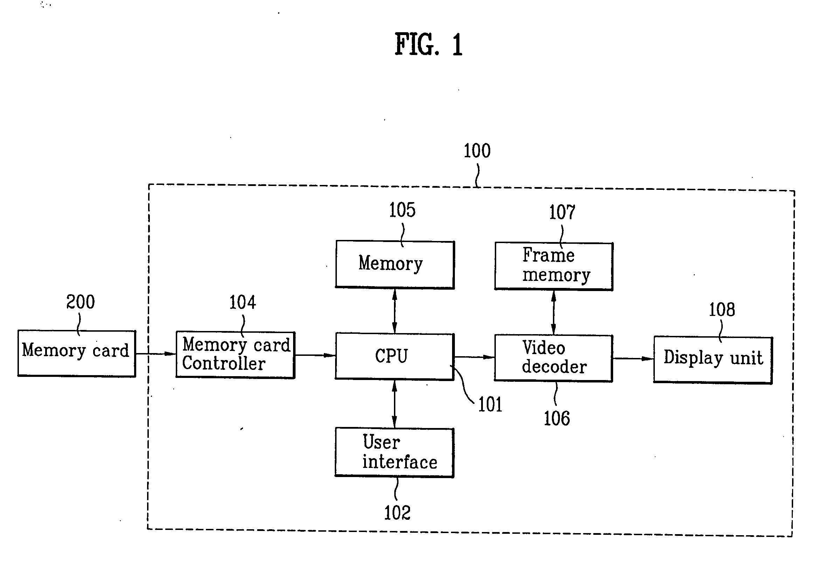

FIG. 1 illustrates a structure of a digital television receiver. A television receiver 100 according to the present invention is connected to a memory card 200 of a camera or a digital video recorder (or camcorder). The memory card 200 stores still images (*i.e.*, digital still images) in JPEG, TIFF or BMP formats. An interface means such as a memory card controller 404, which is connected to an external device, reads the stored images and also additional information corresponding to the stored images. The additional information includes diverse information, such as a file name, a file size and a creation date of the corresponding image. The memory card controller 404 then transmits the images and the corresponding additional information to a central processing unit (CPU) 401.

The CPU 401 uses a decoding engine (*e.g.*, a JPEG CODEC engine) to convert the transmitted images into R/G/B type image data. Then, the CPU 401 stores the R/G/B data in a frame memory 407. A memory 405 stores the additional information and, also, temporarily stores the transmitted images when the CPU 401 converts the transmitted images into the R/G/B data. The CPU 401 may adjust the resolution, color, brightness, contrast, and so on of the transmitted image in accordance with a user command. In addition, the CPU 401 may display a thumbnail image window onto a screen of the television receiver, wherein the thumbnail image window includes a plurality of thumbnail images. Alternatively, the CPU 401 may also display a slide-window onto the screen, wherein the slide-window includes a full-size image and a thumbnail image. Herein, the "thumbnail image" refers to a small-size version of an original image that is displayed for an overall view (or overview).

A video decoder 406 converts the R/G/B data that is stored in the frame memory 407 into a set of displayable data and, then, transmits the converted data to a display 408. A user interface 402 is one of a remote controller and a command key panel. The user interface 402 receives a user command and transmits the received command to the CPU 401.

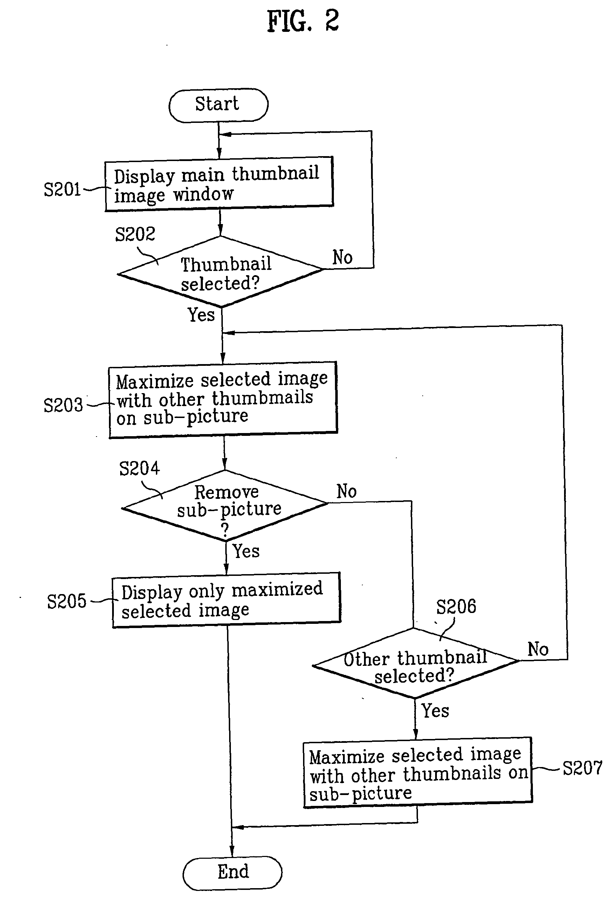

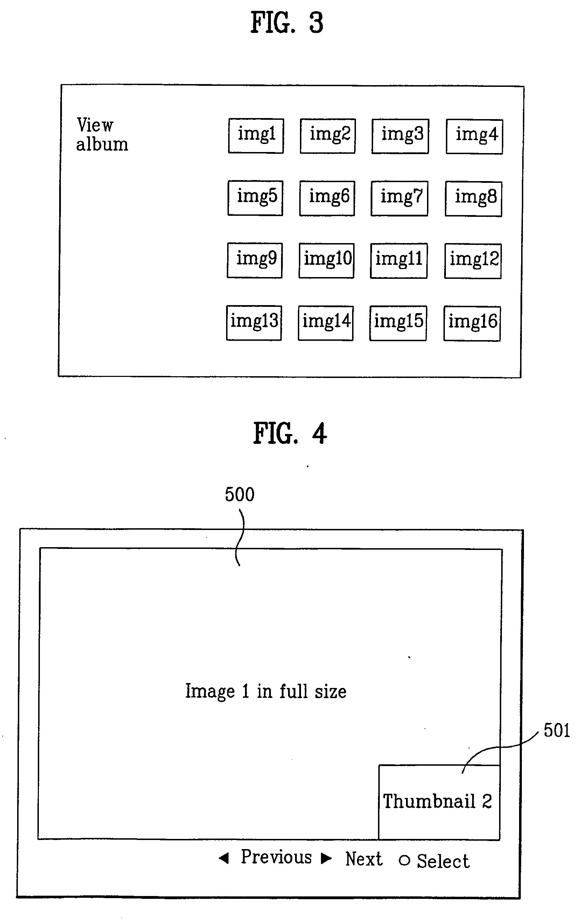

A method of searching and displaying an image of an electronic photo album will now be described in detail. FIG. 2 illustrates a flow chart showing the process steps of the method searching and displaying images of the electronic photo album according to the present invention. Referring to FIG. 2, when the user desires to search or display images that are stored in a memory card 200 or in a memory of an external device, the user uses the user interface 402 to select an electronic photo album function of the digital television. When the user selects the electronic photo album function, the CPU 401 displays an initial screen, which is a thumbnail image window (or album) shown in FIG. 3, on the display 408 (S201).

When the user selects a desired thumbnail image from the thumbnail image window (or album) (S202), the CPU 401 enlarges (or maximizes) the selected thumbnail image to a full-size image, and a slide-window including the full-size version of the selected image and the other thumbnail images is displayed on the display 408 (S203). The slide-window includes the selected image displayed on a main picture and at least one thumbnail image being displayed on a sub-picture. The sub-picture is located at a set region of the entire screen, in other words, at the edge portion of the screen.

FIG. 4 illustrates an example of a slide-window according to the present invention. Referring to FIG. 4, the slide-window includes a full-size version of the selected image being displayed on a main picture 500, and another thumbnail image being displayed on a sub-picture 501. For example, when the user selects image 1, the selected image 1 is displayed on the main picture 500 in full size. And, the next thumbnail image (*e.g.*, image 2) is displayed on the sub-picture 501. The image that is displayed on the sub-picture 501 may either be a previous thumbnail image (image 0) or a next thumbnail image (image 2).

The slide-window also includes selectable options "PREVIOUS" and "NEXT" for searching the other thumbnail images in series or for changing the thumbnail image displayed on the sub-picture 501. The slide-window further includes a "SELECT" option for changing the thumbnail image displayed on the sub-picture 501 and displaying the newly changed thumbnail image on the main picture 500 in full size. The user may search or view the images stored in the memory card 200 by using the above-described options. Herein, the CPU 401 changes the thumbnail image displayed on the sub-picture 501 based upon a memory map of the frame memory 407.

Furthermore, when the user selects a specific command key of the user interface 402, the CPU 401 reads the additional information corresponding to the selected image, which is displayed on the main picture 500, from the memory 405 and, then, displays the additional information onto the screen. The additional information includes diverse information, such as the file name, file size, and creation date of the selected image.

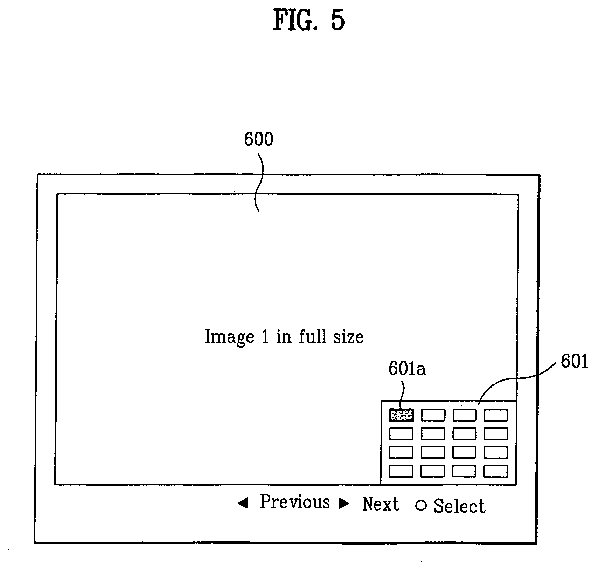

FIG. 5 illustrates another example of a slide-window according to the present invention. Referring to FIG. 5, the slide-window includes the selected image displayed on a main picture 600 in full size, and a reduced version of the thumbnail image window (or album) displayed on a sub-picture 601. For example, when the user selects a thumbnail image 1 601a, the selected thumbnail image 1 601a is displayed on the main picture 600 in full size, and all the thumbnail images are displayed on the sub-picture 601. The CPU 401 displays the thumbnail images on the sub-picture 601 based upon a memory map of the frame memory 407. The slide-window includes selectable options "PREVIOUS", "NEXT", and "SELECT" for searching and selecting different thumbnail images on the sub-picture 601. When the user uses the selectable options to move the cursor on the sub-picture 601, the CPU 401 changes the image displayed on the main picture 600 based on the movement of the cursor. For example, when the user moves the cursor from thumbnail image 1 to thumbnail image 2, the CPU 401 automatically displays thumbnail image 2 on the main picture in full size. Also, when the user moves the cursor from thumbnail image 1 to thumbnail image 2 and then selects the option "SELECT", the CPU 401 may display the selected thumbnail image 2 on the main picture in full size.

In addition, when the user selects an "INFORMATION" key on the user interface 402, the CPU 401 reads the additional information corresponding to the selected image that is being displayed on the main picture 600 from the memory 405 and, then, displays the read information on the screen. Furthermore, when the user selects an "AUTO SEARCH" key on the user interface 402, the CPU 401 serially selects the thumbnail images on the sub-picture 601 and, then, serially displays the selected thumbnail images onto the main picture 600. If the user wishes to dismiss the sub-picture 501 and 601 (S204), the CPU 401 displays the selected image onto the entire screen (S205). Subsequently, when the user searches and selects another thumbnail image on the sub-picture 501 and 601 (S206), the CPU 401 displays the selected image on the main picture in full size and displays the other thumbnail images on the sub-picture (S207).

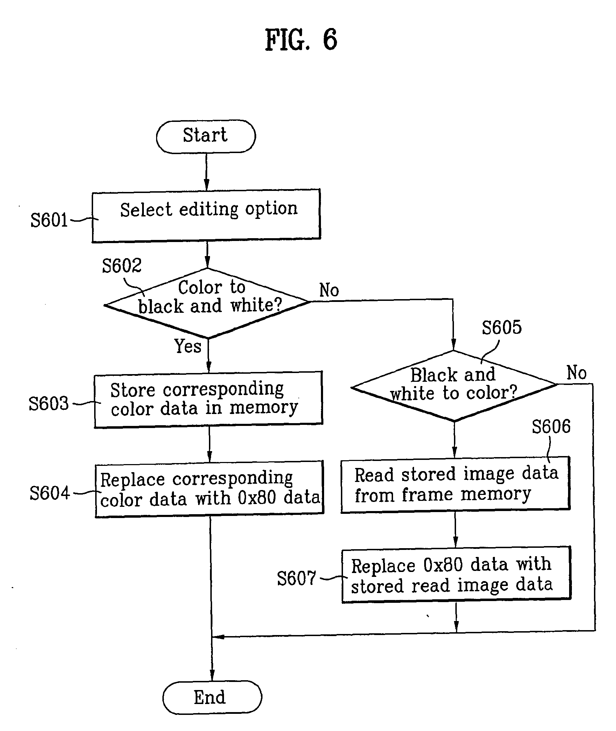

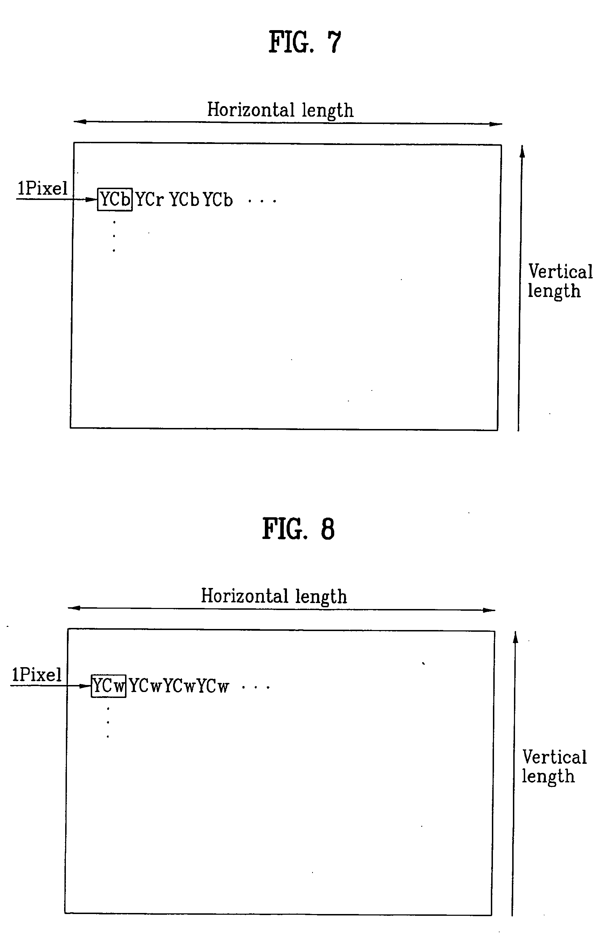

A method of editing images of an electronic photo album according to the present invention will now be described in detail. FIG. 6 illustrates a flow chart showing the process steps of editing an image of the electronic photo album according to the present invention. The frame memory 407 stores the information corresponding to each pixel (*i.e.*, pixel information) of the image. The pixel information includes a Y element representing the brightness of the pixel, and one of a Cb element and a Cr element representing the color of the pixel. FIG. 7 illustrates pixels of a color image. Each pixel consists of Ycb or Ycr. When, the user selects an editing option on the user interface (S601), the CPU 401 edits the image presented on the display 408 in accordance with the user command.

When the user wishes to change the color image into a black-and-white image (S602), the CPU 401 stores the pixel information and, more specifically, the Cb and Cr color elements of the color image in the frame memory 407 (S603). The stored color elements Cb and Cr may be used when the newly changed (or edited) black-and-white image is changed back to the original color image. Thereafter, the CPU 401 replaces (or substitutes) the color elements Cb and Cr of the color image with an element Cw, which has zero color value (S604). Thus, the newly edited black-and-white image is displayed on the display 408. FIG. 8 illustrates pixels of a black-and-white image. Herein, the element Cw is represented as '080' 128.

When the user desires to change the newly edited black-and-white image back to the original color image, the CPU 401 reads the color elements stored in the frame memory (S606). Then, the CPU 401 combines the color elements corresponding to each pixel with the black-and-white image. More specifically, the element Cw included in the black-and-white image is replaced (or substituted) with the color elements Cb or Cr (S607). Afterwards, the video decoder 406 receives a color image including the color elements Cb and Cr from the CPU 401 and, then, displays the received color image on the display 408. In addition, the CPU 401 adjusts the color elements of the selected image, so as to change the color of the selected image. And, the CPU 401 may adjust the brightness element of the selected image, so as to change the brightness of the image. Furthermore, the CPU 401 may not only change the entire image but also change a portion of the image from color to black-and-white or black-and-white to color image.

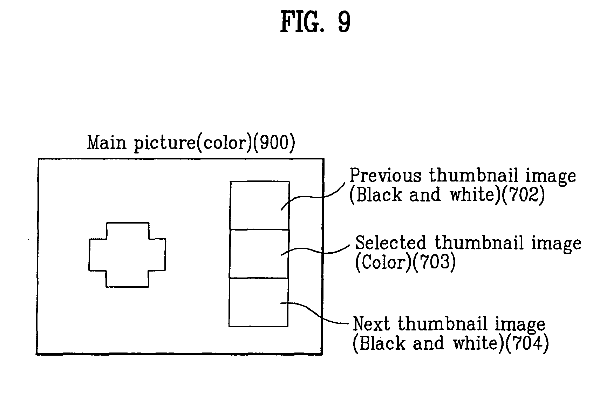

FIG. 9 illustrates an editing window according to the present invention. Referring to FIG. 9, the editing window includes a sub-picture for displaying a previous thumbnail image (image 1), a selected thumbnail image (image 2), and a next thumbnail image (image 3), *i.e.,* a picture-in-picture (PIP). The user may set up the sub-picture *(i.e.,* PIP) so that each of the thumbnail images is displayed in color or in black-and-white. For example, the sub-picture includes three windows 702, 703, and 704 each respectively displaying the previous thumbnail image, the present (or selected) thumbnail image, and the next thumbnail image. The windows 702 and 704 displaying the previous thumbnail image and the next thumbnail image display the images in black-and-white, and the window 703 displaying the present thumbnail image displays the image in color.

The selected image (image) is displayed on a main picture 900 of the editing window in full size. The user may use the user interface 402 to select a portion 701 of the selected image and to change the selected image portion 701 into color or black-and-white. The user may also modify the size or shape of the selected image portion 701. The CPU 401 modifies the pixel information corresponding to the selected image portion 701, thereby enabling the selected image portion 701 to be edited.

As described above, the television receiver and method of displaying and editing images in an electronic photo album according to the present invention provides a sub-picture for searching the images in the electronic photo album. Since the sub-picture displays in advance an overall view (or overview) of the previous image or the next image, the user may use the sub-picture to easily search and select a desired image. Also, the user uses the sub-picture to select an image he or she wishes to edit, and the user may use a user interface to edit the selected image from the television screen.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

The claims refer to examples of preferred embodiments of the invention. However, the invention also refers to the use of any single feature and subcombination of features which are disclosed in the claims, the description and / or the drawings.

## Claims

1. A television receiver, comprising:
an interface means reading a plurality of still images and additional information corresponding to the still images, wherein the still images are stored in an external device;
a central processing unit displaying a window including a sub-picture for searching the still images, and a main picture for displaying a still image selected from the sub-picture; and
a memory for storing the read additional information.

2. The television receiver of claim 1, wherein the additional information comprises at least one of a file name, a file size, and a file creation date of each of the still images.

3. The television receiver of claim 1, wherein the window further includes at least one selectable option for searching the still images from the sub-picture.

4. The television receiver of claim 1, wherein the central processing unit comprises a CODEC engine converting the still images into R/G/B format images.

5. The television receiver of claim 1, wherein the central processing unit displays the still image selected from the sub-picture onto the main picture in full size.

6. The television receiver of claim 1, wherein the central processing unit changes color information corresponding to pixels of the selected still image.

7. The television receiver of claim 6, wherein the central processing unit changes a value of the color information to 0, so as to change the still image into a black-and-white image.

8. The television receiver of claim 1, wherein the central processing unit stores color information for pixels of the selected still image into a frame memory.

9. The television receiver of claim 8, wherein the central processing unit displays the still images onto the sub-picture in a thumbnail size.

10. A method of displaying an image of a television receiver, comprising:
reading a plurality of still images stored in an external device;
displaying the still images onto a sub-picture;
selecting any one of the still images displayed onto the sub-picture; and
displaying the selected still image onto a main picture.

11. The method of claim 10, wherein the displaying the still images onto a sub-picture comprises:
displaying the still images onto the sub-picture one by one.

12. The method of claim 10, wherein the displaying the still images onto a sub-picture comprises:
displaying the still images onto the sub-picture in a thumbnail size.

13. The method of claim 10, wherein the displaying the selected still image onto a main picture comprises:
displaying the selected still image onto the main picture in full size.

14. The method of claim 10, further comprising:
reading additional information corresponding to the still images from the external device.

15. The method of claim 10, wherein the additional information includes at least one of a file name, a file size, and a file creation date of each of the still images.

16. The method of claim 14, further comprising:
storing the additional information in a memory; and
displaying the stored additional information.

17. The method of claim 10, further comprising:
storing color information for pixels of the selected still image in a frame memory.

18. The method of claim 17, further comprising:
changing the color information for pixels of the selected still image in accordance with a user command.

19. The method of claim 18, wherein the changing the color information for pixels of the selected still image comprises:
changing a value of the color information to 0, so as to change the still image into a black-and-white image.

20. A method of displaying an image of a television receiver, comprising:
displaying still images onto a sub-picture;
selecting any one of the still images being displayed onto the sub-picture;
displaying the selected still image onto a main picture;
selecting a portion of the still image; and
changing color information for pixels corresponding to the selected portion.

21. The method of claim 20, wherein the changing color information for pixels corresponding to the selected portion comprises:
changing a value of the color information to 0, so as to change the selected portion into a black-and-white image portion.

22. The method of claim 20, further comprising:
changing brightness information for pixels of the selected portion.
